# FASCICULE DE BREVET EUROPEEN

(11) **EP 2 922 748 B1**
(45) Date de publication et mention de la délivrance du brevet: **14.12.2016**
(21) Numéro de dépôt: 13808099.9
(22) Date de dépôt: 22.11.2013
(51) Int. Cl.: B63B 35/00, B63H 7/02, B63B 3/08

(54) **ENGIN FLOTTANT DE PRÉLÈVEMENT D' ÉCHANTILLONS LIQUIDES**
SCHWIMMKÖRPER ZUR ENTNAHME FLÜSSIGER PROBEN
FLOATING VESSEL FOR TAKING LIQUID SAMPLES

(30) Priorité: 23.11.2012 FR 1261183
(43) Date de publication de la demande: 30.09.2015
(73) Titulaire: Spygen, 73370 Le Bourget du Lac (FR)
(72) Inventeur: DEJEAN, Tony, 73420 Mery (FR); LE MEAUX, Olivier, F-69003 Lyon (FR)
(74) Mandataire: Delorme, Nicolas
(86) Numéro de dépôt international: PCT/FR2013/052835
(87) Numéro de publication internationale: WO 2014/080143

(56) Documents cités:
- DE-B- 1 251 176
- US-A- 5 218 918
- US-B1- 6 536 272

## Description

La présente invention concerne un engin flottant de prélèvement d'échantillons liquides.

Dans le domaine de la recherche biologique ou chimique, il est utile d'effectuer des prélèvements dans des milieux aquatiques pour, ultérieurement, effectuer par exemple des analyses d'ADN.

Lors du prélèvement, il est tout à fait critique de ne pas venir perturber et contaminer le milieu dans lequel le prélèvement est effectué. On comprend que des prélèvements contaminés ne sont d'aucune valeur scientifique.

Le document US 6 536 272 est considéré comme l'état de la technique le plus proche de l'objet de la revendication 1 et décrit toutes les caractéristiques techniques de son préambule.

Or, les moyens actuels de prélèvement comme par exemple le vaisseau montré par le document US 6 536 272 ne permettent pas de garantir que le vaisseau même de prélèvement ne vient pas contaminer lé milieu dans lequel le prélèvement est effectué.

Dans ce contexte technique, il existe donc un besoin d'un engin aquatique permettant d'effectuer des prélèvements sans entraîner de contamination du milieu.

La présente invention concerne un engin flottant de prélèvement d'échantillons liquides comprenant une coque présentant une carène destinée à être immergée dans un milieu liquide au dessous de la ligne de flottaison et une superstructure située au dessus de la ligne de flottaison, l'engin comprenant des moyens de propulsion aérien et des moyens de prélèvement et stockage d'échantillons et des moyens de commande à distance des moyens de propulsion aériens et des moyens de prélèvement, l'engin comprenant en outre une coque secondaire amovible dotée de moyens de fixation sur la coque de l'engin recouvrant au moins la carène de l'engin.

L'invention fournit donc un engin autonome pouvant se déplacer sur un plan d'eau ou sur un cours d'eau pour effectuer des prélèvements sur lequel une coque secondaire est placée à chaque nouvelle campagne de prélèvement. En d'autres termes, l'invention propose un engin qui garantit l'absence de contamination du milieu dans lequel les prélèvements vont être effectués.

Selon plusieurs caractéristiques de l'invention pouvant être mises en oeuvre de manière indépendante ou combinée :
- la coque présente une nervure périphérique et en ce que la coque secondaire présente un retour périphérique conçu pour s'encliqueter sur la nervure de la coque.
- l'engin comprend une pompe péristaltique comprenant un train de galets pressant un tube élastique situé à l'extérieur de la coque.
- la superstructure présente un capot amovible dans lequel est ménagée au moins une alvéole conçue pour recevoir un conteneur dans lequel un prélèvement peut être stockée.
- le capot comprend une bulle transparente située au dessus d'un alvéole.
- l'engin comprend au moins une caméra motorisée par rapport à au moins un axe vertical Z de l'engin.
- la caméra est positionnée au droit de la bulle transparente.
- la coque présente au niveau de son étrave un panneau transparent.
- la caméra est mobile et est motorisée autour d'un axe transversal Y de l'engin de façon à pivoter d'une position dans laquelle la caméra est positionnée en regard de la bulle transparente et une position dans laquelle la caméra est positionnée en regard du panneau transparent.
- la coque secondaire est réalisée dans un matériau transparent.
- l'engin comprend au moins une hélice positionnée à l'extrémité d'un mat dépassant de la superstructure de l'engin, l'hélice étant entrainée par un moteur électrique placé en haut du mat.
- l'engin comprend deux mats reliés par une courroie d'entrainement permettant de synchroniser l'orientation des hélices.
- l'engin embarque une ou plusieurs batteries alimentant les moteurs entrainant au moins l'un des équipements du groupe comprenant la pompe, la ou les caméras, la ou les hélices.

Pour sa bonne compréhension, l'invention est décrite en référence aux figures ci annexées représentant, à titre d'exemple non limitatif, une forme de réalisation d'un engin aquatique selon celle-ci.
Figure 1 est une vue en perspective de trois quart avant de l'engin aquatique selon l'invention,
Figure 2 est une vue en perspective de trois quart arrière,
Figure 3 est en vue en perspective de trois quart avant de la partie immergée de l'engin,
Figure 4 est une vue similaire à la figure 1 sur laquelle un capot est ôté.

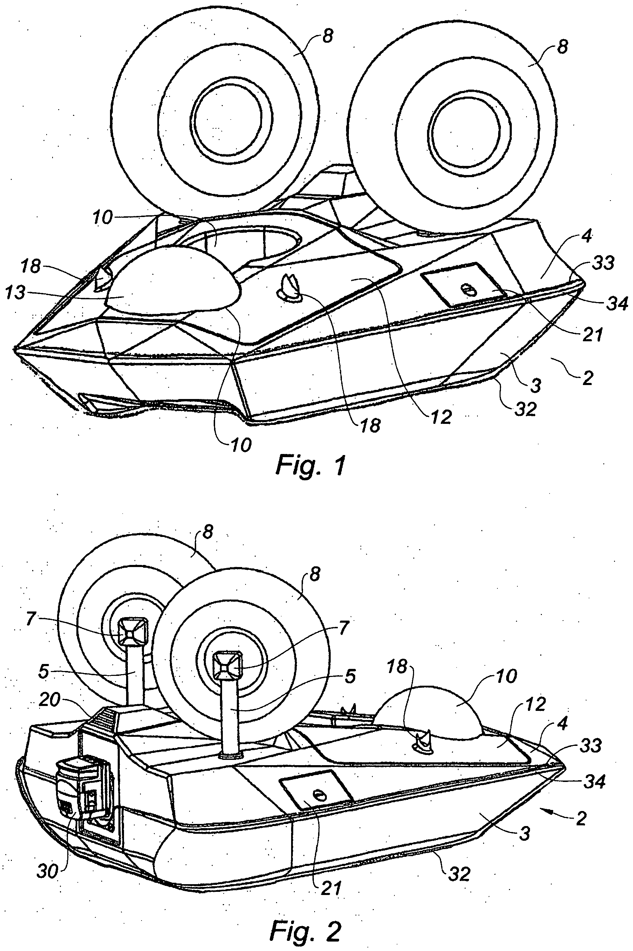

En se référant tout d'abord à la figure 1, l'engin aquatique selon l'invention présente, dans sa forme de réalisation illustrée, une forme générale en trapèze. L'engin comprend une coque 2 dont une partie dite carène 3 est destinée à être immergée dans un liquide dans lequel on souhaite effectuer un prélèvement et une partie de superstructure 4 formant le pont. La coque 2 et la superstructure 4 peuvent être réalisées, par exemple, en fibre de carbone.

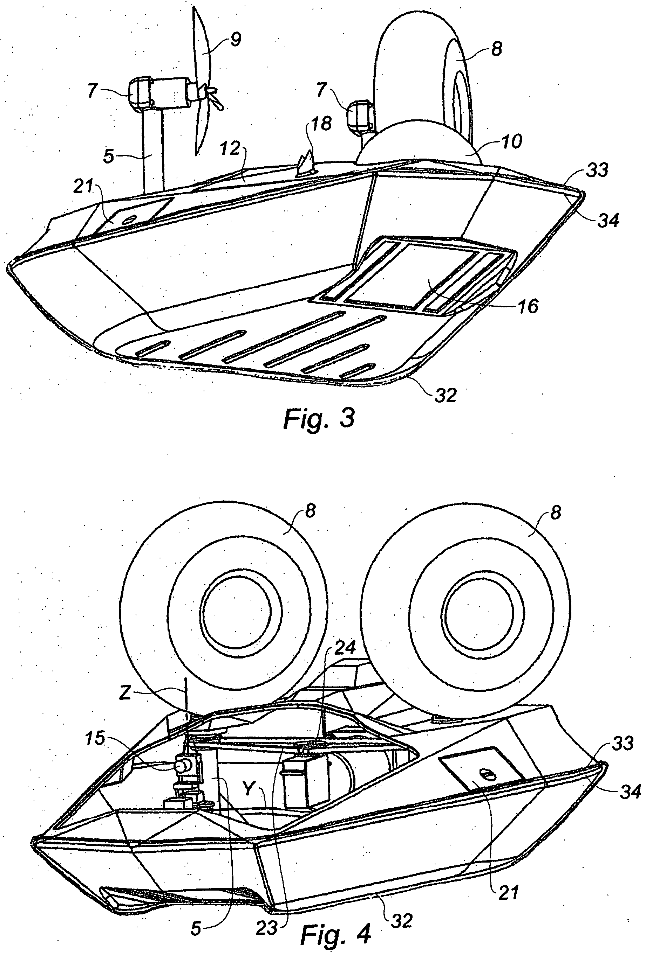

La figure 3 fait apparaître une disposition importante de l'invention qui est que la carène 3 ne présente aucune partie dépassante. En d'autres termes, comme on peut le voir sur cette figure, la carène 3 est dépourvue de tout élément ou tout accessoire formant une aspérité hormis deux dérives XX qui participent à la manoeuvrabilité de l'engin.

On verra plus loin que cette disposition est d'importance dans le cadre de la présente invention.

En se reportant à la figure 2, on peut voir que la superstructure 4 présente deux mâts 5 qui, chacun, supportent une motorisation électrique 7. La motorisation électrique 7 disposée à l'extrémité de deux mats entraine une hélice 9. L'hélice 9 est encapsulée dans un capotage 8. Les deux hélices 9 sont disposées sur la partie postérieure du pont.

La partie antérieure du pont est, pour sa part, dotée de deux alvéoles 10 qui, dans le cas présent, sont disposées en tandem.

Les deux alvéoles 10 sont ménagées dans un capot 12 amovible.

La figure 4 montre l'engin dans une configuration dans laquelle le capot 12 est retiré.

L'alvéole 10 avant est dotée d'une bulle transparente 13 et protège une caméra 15. On peut voir que la caméra 15 est disposée sur un axe Z qui lui permet de tourner sur un angle de 360°.

Le mouvement de la caméra 15 est contrôlé par une motorisation électrique.

Il est précisé que dans une variante de l'invention, le panneau 16 qui est positionné au niveau de la zone d'étrave de l'engin peut être lui-même transparent. Cette disposition permet de disposer d'une zone de vision sous-marine. Cette zone de vision sous marine peut être mise à profit en faisant basculer la camera de sorte qu'au lieu d'avoir une vision aérienne au travers de la bulle transparente 13, celle-ci soit positionnée en regard du panneau transparent 16 de la zone d'étrave et dispose d'une vision sous-marine.

Dans cette forme de réalisation, la caméra 15 est mobile selon deux axes. Elle est mobile autour d'un axe vertical pour donner une vision jusqu'à 360° autour de l'engin et elle est mobile autour d'un axe transversale Y de manière à basculer d'une position aérienne dans laquelle la caméra est positionnée à l'intérieur de la bulle transparente 13 à une position sous marine dans laquelle la caméra est en regard du panneau transparent 16.

L'alvéole qui se situe en arrière de l'alvéole pourvue de la caméra présente un diamètre qui lui permet de recevoir un conteneur qui n'est pas représenté sur les figures.

On note également la présence de deux trappes latérales 21.

Les deux mâts 5 sont reliés par un organe de liaison telle qu'une courroie 23 ou une chaine qui est elle-même entraînée par un galet 24 ou une roue dentée lié à une motorisation électrique.

Ainsi, lorsque la motorisation liée au galet 24 est mise en action, chacun des mâts 5 et donc chacune des hélices 9 tournent de manière synchrone. Cela permet de contrôler le déplacement de l'engin en l'absence de gouvernail immergé.

Bien que cela n'apparaisse pas sur les figures, la cavité interne qui est délimitée par la coque 2 et par la superstructure 4 reçoit les batteries qui permettent d'alimenter les différentes motorisations que l'on a décrites précédemment.

Les deux fenêtres latérales 21 peuvent être utilisées pour permettre d'accéder aux batteries en vue de les recharger. Ces batteries peuvent être de technologie plomb ou lithium ion ou lithium polymère.

Dans l'exemple montré sur les figures 1 à 4, on peut voir également que deux prises d'air 18 sont disposées latéralement de part et d'autre des deux alvéoles. Ces deux prises d'air 18 agissent avec un extracteur 20 situé en partie postérieure de l'engin. Il se produit un flux d'air qui permet d'assurer l'extraction de la chaleur dégagée par les piles et moteur électrique.

La figure 3 montre également un des éléments importants de l'invention qui est la présence d'une pompe 30 fixée sur la partie antérieure de l'engin. La pompe est de préférence une pompe 30 de type péristaltique. La pompe 30 péristaltique comprenant un train de galets pressant un tube élastique est située à l'extérieur de la coque 2. Un tube relié à la pompe 30 plonge dans le milieu aquatique et alimente un conteneur de prélèvements positionné dans l'engin aquatique.

Il est également prévu une électronique de commande qui contrôle l'ensemble des moteurs précités. De façon connue en soi, l'électronique de commande comprend des moyens de communications sans fils avec un terminal déporté qui permet d'agir à distance sur l'ensemble des équipements embarqués dans l'engin c'est-à-dire les moteurs, la pompe, la caméra ainsi que le ou les moteurs qui en contrôlent son déplacement.

L'un des points importants de l'invention est la présence d'une coque secondaire 32 qui vient se chausser sur la coque 2 de l'engin.

Cette coque secondaire 32 est de préférence en matière plastique et présente un retour périphérique 33 qui permet son encliquetage sur une nervure 34 formée dans le cas illustré par l'arête de liaison entre la coque 2 et la superstructure 4.

La coque secondaire 32 est chaussée en la faisant fléchir de manière à ce qu'elle s'écarte pour venir s'encliqueter sur la nervure 34 de la coque. La coque secondaire 32 est pour cela dotée du retour périphérique 35 qui assure l'encliquetage avec la nervure 34.

Ainsi, avant qu'une campagne de prélèvements ne soit initiée, une coque secondaire 32, qui présente des conditions de stérilité, est chaussée sur l'engin. L'engin peut être ensuite mis à l'eau dans le milieu en question. Les hélices 9 permettent de diriger l'engin sur le plan d'eau.

La présence de la caméra 15 permet, lorsque l'engin n'est plus en vue de l'opérateur, de participer au pilotage de l'engin.

La campagne de prélèvements étant effectuée, l'engin est retiré du plan d'eau. La coque secondaire 32 est ôtée de l'engin pour être, selon les cas, jetée, recyclée ou stérilisée.

Les tubes élastiques, qui ont permis de réaliser les prélèvements, sont également retirés de l'engin pour être, de la même manière, jetés, recyclés ou stérilisés.

Le conteneur dans lequel le prélèvement de liquide est stocké est retiré de l'engin pour être analysé.

L'utilisation d'une pompe 30 péristaltique permet de plus de garantir qu'aucun n'échange ne s'est produit avec des parties internes de l'engin.

Il est précisé que l'engin permet d'effectuer deux types de prélèvements. D'une part, l'engin permet d'effectuer des prélèvements de liquides dans un conteneur ; d'autre part l'engin peut être équipé d'une capsule de filtration disposée en aval de la pompe. Dans ce dernier cas, les filtrats sont recueillis pour être analysés.

L'invention fournit donc une solution pour réaliser des prélèvements dans un milieu aquatique de manière totalement stérile, puisque l'engin est pourvu d'une coque secondaire, à usage unique, qui garantit l'absence de contamination du milieu.

Bien entendu, l'invention n'est pas limitée à la forme de réalisation décrite ci-dessus, mais elle en embrasse au contraire toutes les formes de réalisation. Ainsi, à la place des deux hélices synchrones, il peut être envisagé dans un engin de plus petite taille, de doter ce dernier d'une unique hélice aérienne fixe avec, en tandem, un gouvernail motorisé et contrôlé à distance. Il est également envisagé de doter l'engin de plusieurs pompes et/ou de plusieurs alvéoles permettant de recevoir plusieurs containers dans lesquels plusieurs prélèvements peuvent être stockés.

Par ailleurs la coque secondaire pourrait également être fixée sur la coque de l'engin par des moyens de connexion de type vis/écrou, inserts magnétiques, zones textiles à boucles et crochets.

## Revendications

1. Engin flottant de prélèvement d'échantillons liquides comprenant une coque (2) présentant une carène (3) destinée à être immergée dans un milieu liquide au dessous d'une ligne de flottaison et une superstructure (4) située au dessus de la ligne de flottaison, l'engin comprenant des moyens de propulsion, des moyens de prélèvement et stockage d'échantillons et des moyens de commande à distance des moyens due propulsion et des moyens de prélèvement, **caractérisé en ce que** les moyens de propulsion sont des moyens de propulsion aériens et **en ce que** l'engin comprend une coque secondaire (32) amovible dotée de moyens de fixation sur la coque (2) de l'engin recouvrant au moins la carène (3) de l'engin.

2. Engin flottant selon la revendication 1, **caractérisé en ce que** la coque (2) présente une nervure périphérique (34) et **en ce que** la coque secondaire (32) présente un retour périphérique (33) conçu pour s'encliqueter sur la nervure (34) de la coque.

3. Engin flottant selon la revendication 1 ou la revendication 2, **caractérisé en ce que** l'engin comprend une pompe (30) péristaltique comprenant un train de galets pressant un tube élastique situé à l'extérieur de la coque.

4. Engin flottant selon l'une des revendications 1 à 3, **caractérisé en ce que** la superstructure (4) présente un capot (12) amovible dans lequel est ménagée au moins une alvéole (10) conçue pour recevoir un conteneur dans lequel un prélèvement peut être stockée.

5. Engin flottant selon la revendication 4, **caractérisé en ce que** le capot (12) comprend une bulle (13) transparente située au dessus d'un alvéole (10).

6. Engin flottant selon l'une des revendications 1 à 5, **caractérisé en ce que** l'engin comprend au moins une caméra (15) motorisée par rapport à au moins un axe vertical Z de l'engin.

7. Engin flottant selon la revendication 5 et la revendication 6, **caractérisé en ce que** la caméra (15) est positionnée au droit de la bulle transparente (10).

8. Engin flottant selon l'une des revendications 1 à 7, **caractérisée en ce que** la coque (2) présente au niveau de son étrave un panneau transparent (16).

9. Engin flottant selon l'une des revendications 6 à 8, **caractérisé en ce que** la caméra (15) est mobile et est motorisée autour d'un axe transversal Y de l'engin de façon à pivoter d'une position dans laquelle la caméra est positionnée en regard de la bulle (13) transparente et une position dans laquelle la caméra est positionnée en regard du panneau transparent (16).

10. Engin flottant selon l'une des revendications 1 à 9, **caractérisé en ce que** la coque secondaire (32) est réalisée dans un matériau transparent.

11. Engin flottant selon l'une des revendications 1 à 10, **caractérisé en ce que** l'engin comprend au moins une hélice (9) positionnée à l'extrémité d'un mat (5) dépassant de la superstructure (4) de l'engin, l'hélice (9) étant entrainée par un moteur électrique (7) placé en haut du mat.

12. Engin flottant selon la revendication 11, **caractérisé en ce que** l'engin comprend deux mats (5) reliés par une courroie d'entrainement (23) permettant de synchroniser l'orientation des hélices.

13. Engin flottant selon l'une des revendications 1 à 12, **caractérisé en ce que** l'engin embarque une ou plusieurs batteries alimentant les moteurs entrainant au moins l'un des équipements du groupe comprenant la pompe (30), la ou les caméras (15), la ou les hélices (9).

## Patentansprüche

1. Schwimmendes Gerät zur Entnahme von flüssigen Stichproben, einen Rumpf (2) umfassend, der einen Unterwasserrumpf (3) aufweist, der dazu bestimmt ist, in ein flüssiges Medium unterhalb einer Wasserlinie eingetaucht zu werden, sowie einen Oberbau (4), der sich oberhalb der Wasserlinie befindet, wobei das Gerät Vortriebsmittel, Mittel zur Entnahme und zum Ablegen von Stichproben, sowie Mittel zum Fernsteuern der Vortriebsmittel und der Mittel zur Entnahme umfasst, **dadurch gekennzeichnet, dass** die Vortriebsmittel Luftvortriebsmittel sind und dadurch, dass das Gerät einen abnehmbaren Sekundärrumpf (32) umfasst, der mit Mitteln zum Befestigen am Rumpf (2) des Gerätes versehen ist, und zumindest den Unterwasserrumpf (3) des Gerätes abdeckt.

2. Schwimmendes Gerät nach Anspruch 1, **dadurch gekennzeichnet, dass** der Rumpf (2) eine umlaufende Rippe (34) aufweist, und dadurch, dass der Sekundärrumpf (32) eine umlaufende Rückführung (33) aufweist, die gestaltet ist, um an der Rippe (34) des Rumpfes einzurasten.

3. Schwimmendes Gerät nach Anspruch 1 oder Anspruch 2, **dadurch gekennzeichnet, dass** das Gerät eine Schlauchpumpe (30) umfasst, die einen Druckrollenwagen umfasst, der einen Schlauch zusammendrückt, der sich außen am Rumpf befindet.

4. Schwimmendes Gerät nach einem der Ansprüche 1 bis 3, **dadurch gekennzeichnet, dass** der Oberbau (4) eine abnehmbare Abdeckung (12) aufweist, in der zumindest ein Fach (10) angeordnet ist, das gestaltet ist, um einen Behälter aufzunehmen, in dem eine Entnahme abgelegt werden kann.

5. Schwimmendes Gerät nach Anspruch 4, **dadurch gekennzeichnet, dass** die Abdeckung (12) eine durchsichtige Blase (13) umfasst, die sich oberhalb eines Faches (10) befindet.

6. Schwimmendes Gerät nach einem der Ansprüche 1 bis 5, **dadurch gekennzeichnet, dass** das Gerät zumindest eine Kamera (15) umfasst, die im Verhältnis zu zumindest einer vertikalen Achse Z des Gerätes motorisiert ist.

7. Schwimmendes Gerät nach Anspruch 5 und Anspruch 6, **dadurch gekennzeichnet, dass** die Kamera (15) auf Höhe der durchsichtigen Blase (10) positioniert ist.

8. Schwimmendes Gerät nach einem der Ansprüche 1 bis 7, **dadurch gekennzeichnet, dass** der Rumpf (2) auf Höhe seines Bugs eine durchsichtige Platte (16) aufweist.

9. Schwimmendes Gerät nach einem der Ansprüche 6 bis 8, **dadurch gekennzeichnet, dass** die Kamera (15) beweglich ist und um eine quer verlaufende Achse Y des Gerätes motorisiert ist, um von einer Position, in der die Kamera gegenüber der durchsichtigen Blase (13) positioniert ist, in eine Position zu schwenken, in der die Kamera gegenüber der durchsichtigen Platte (16) positioniert ist.

10. Schwimmendes Gerät nach einem der Ansprüche 1 bis 9, **dadurch gekennzeichnet, dass** der Sekundärrumpf (32) aus einem durchsichtigen Material gefertigt ist.

11. Schwimmendes Gerät nach einem der Ansprüche 1 bis 10, **dadurch gekennzeichnet, dass** das Gerät zumindest einen Propeller (9) umfasst, der am Ende eines Mastes (5) positioniert ist, der aus dem Oberbau (4) des Gerätes herausragt, wobei der Propeller (9) durch einen Elektromotor (7) angetrieben wird, der oben am Mast platziert ist.

12. Schwimmendes Gerät nach Anspruch 11, **dadurch gekennzeichnet, dass** das Gerät zwei Maste (5) umfasst, die durch einen Antriebsriemen (23) verbunden sind, durch den die Ausrichtung der Propeller synchronisiert werden kann.

13. Schwimmendes Gerät nach einem der Ansprüche 1 bis 12, **dadurch gekennzeichnet, dass** im Gerät eine oder mehrere Batterien eingeladen sind, welche die Motoren versorgen, die zumindest eines der Arbeitsgeräte der Gruppe antreibt, welche die Pumpe (30), die Kamera(s) (15), den oder die Propeller (9) umfasst.

## Claims

1. A floating vessel for collecting liquid samples comprising a hull (2) having a bottom (3) intended to be immersed in a aqueous medium beneath a waterline and a superstructure (4) located beneath the waterline, the vessel comprising propulsion means, sample collecting and storing means and remote control means of the propulsion means and the collecting means, **characterized in that** the propulsion means are air propulsion means and **in that** the vessel comprises a secondary removable hull (32) provided with fastening means on the hull (2) of the vessel covering at least the bottom (3) of the vessel.

2. The floating vessel according to claim 1, **characterized in that** the hull (2) has a peripheral rib (34) and **in that** the secondary hull (32) has a peripheral return (33) designed to snap on the rib (34) of the hull.

3. The floating vessel according to claim 1 or 2, **characterized in that** the vessel comprises a peristaltic pump (30) comprising a roller assembly pressing an elastic tube located outside of the hull.

4. The floating vessel according to any of claims 1 to 3, **characterized in that** the superstructure (4) has a removable cover (12) in which at least one cell (10) designed for accommodating a container in which a sampling may be stored, is arranged.

5. The floating vessel according to claim 4, **characterized in that** the cover (12) comprises a transparent bubble (13) located above a cell (10).

6. The floating vessel according to any of claims 1 to 5, **characterized in that** the vessel comprises at least one camera (15) powered with respect to at least one vertical axis Z of the vessel.

7. The floating vessel according to claim 5 and 6, **characterized in that** the camera (15) is positioned adjacent to the transparent bubble (10).

8. The floating vessel according to any of claims 1 to 7, **characterized in that** the hull (2) has at its bow a transparent panel (16).

9. The floating vessel according to any of claims 6 to 8, **characterized in that** the camera (15) is movable and is powered about a transverse axis Y of the vessel so as to pivot from a position in which the camera is positioned facing the transparent bubble (13) and a position in which the camera is positioned facing the transparent panel (16).

10. The floating vessel according to any of claims 1 to 9, **characterized in that** the secondary hull (32) is made of a transparent material.

11. The floating vessel according to any of claims 1 to 10, **characterized in that** the vessel comprises at least one propeller (9) positioned at the end of a mast (5) extending from the superstructure (4) of the vessel, the propeller (9) being driven by an electric motor (7) placed at the top of the mast.

12. The floating vessel according to claim 11, **characterized in that** the vessel comprises two masts (5) connected by a drive belt (23) allowing synchronizing the orientation of the propellers.

13. The floating vessel according to any of claims 1 to 12, **characterized in that** the vessel loads one or more batteries supplying the motors driving at least one of the equipments of the group comprising the pump (30), the camera(s) (15), the propeller(s) (9).
